# EUROPÄISCHE PATENTSCHRIFT

(11) **EP 1 252 038 B1**
(45) Veröffentlichungstag und Bekanntmachung des Hinweises auf die Patenterteilung: **03.03.2004**
(21) Anmeldenummer: 01903661.5
(22) Anmeldetag: 19.01.2001
(51) Int. Cl.: B60N 3/06, A47C 7/50

(54) **FAHRZEUGSITZ FÜR FLUG- ODER KRAFTFAHRZEUGE**
VEHICLE SEAT FOR AIRCRAFT AND MOTOR VEHICLES
SIEGE DE VEHICULE POUR AVIONS ET AUTOMOBILES

(30) Priorität: 27.01.2000 DE 10003407
(43) Veröffentlichungstag der Anmeldung: 30.10.2002
(73) Patentinhaber: Recaro Aircraft Seating GmbH & Co., 74523 Schwäbisch Hall (DE)
(72) Erfinder: BEHNERT, Eckhard, 74545 Michelfeld (DE)
(74) Vertreter: Bartels, Martin Erich Arthur
(86) Internationale Anmeldenummer: PCT/EP2001/000609
(87) Internationale Veröffentlichungsnummer: WO 2001/054941

(56) Entgegenhaltungen:
- EP-A- 0 543 050
- WO-A-92/01409
- DE-A- 4 016 687
- FR-A- 2 371 169
- US-A- 5 302 003
- PATENT ABSTRACTS OF JAPAN vol. 1996, no. 07, 31. Juli 1996 (1996-07-31) -& JP 08 080230 A (KENMOCHIISAMU DESIGN KENKYUSHO:KK), 26. März 1996 (1996-03-26)
- DATABASE WPI Section PQ, Week 200107 Derwent Publications Ltd., London, GB; Class P26, AN 2001-054270 XP002166037 -& JP 2000 312702 A (KYUSHU HITACHI MAXELL KK), 14. November 2000 (2000-11-14)
- PATENT ABSTRACTS OF JAPAN vol. 2000, no. 02, 29. Februar 2000 (2000-02-29) -& JP 11 318631 A (KOITO IND LTD), 24. November 1999 (1999-11-24)

## Beschreibung

Die Erfindung betrifft einen Fahrzeugsitz für Flug- und Kraftfahrzeuge mit einer Rückenlehne und einem Sitzteil, das von einem mit einem Fahrzeugboden verbindbaren Sitzrahmengestell gehalten ist, mit nur einem Tragarm, der an seinem einen freien Ende schwenkbar eine kombinierte Fuß- und Beinstütze als jeweilige Flächen eines Abstützteils aufweist, wobei bei einer Art an möglichen Schwenkstellungen die Fußstütze und bei einer anderen Art an möglichen Schwenkstellungen die Beinstütze ausschließlich realisiert ist.
Dahingehende Fahrzeugsitze, insbesondere Fluggastsitze oder Kraftfahrzeugsitze, sind in einer Vielzahl von Ausführungsformen bekannt. Moderne Fahrzeugsitze weisen dabei eine Vielzahl von Einstellmöglichkeiten für das eigentliche Sitzteil und die Rückenlehne auf. Ferner gehören heutzutage eine gute Polsterung sowie Armlehnen zwecks Komforterhöhung zum Standard.

Im Hinblick auf den Beinkomfort liegt jedoch noch vieles im Argen. So weisen zwar hochwertige Fluggastsitze, wie sie beispielsweise in der 1.Klasse oder in der Business-Klasse Verwendung finden, auch Beinauflagen auf, indem in der Art einer Liege der Bein- und Fußbereich vollständig von einer Auflagefläche als integraler Bestandteil des Sitzes unterlegt wird; allein die dahingehenden bekannten Lösungen lassen sich bereits aus Kostenund Platzgründen heraus für Standardbereiche, wie die Economy-Klasse in Flugzeugen, oder bei einer Standardbestuhlung in Nutzfahrzeugen, wie Omnibussen, nicht einsetzen.

Ein dahingehender Fahrzeugsitz ist durch die EP-B-0539444 (der WO-A-92 01409 entsprechend) bekannt. Bei dieser bekannten Anordnung eines Abstützteils stützt dieses den gesamten Unterschenkel - nebst Fußbereich eines Sitzbenutzers - ab. Das bekannte Abstützteil ist beidseitig mit einem Tragarm verbunden, die schwenkbar und in vorgebbaren Stellungen verrastbar am Sitzrahmengestell angelenkt sind. Innerhalb der kombinierten Fuß- und Beinstütze sind einzelne Stützelemente integriert, die aus einer flächigen Ausgangsstellung heraus in verschiedene Winkelstellungen ausklappbar sind, so daß die Füße eines Sitzbenutzers in unterschiedlichen Positionen und Höhenstellungen auf dem bekannten Abstützteil ablegbar sind. Aufgrund der Vielzahl an bewegbaren und einstellbaren Teilen baut diese Lösung kompliziert auf und ist mithin teuer in der Herstellung. Trotz der Vielzahl an Einstellmöglichkeiten ist die jeweilige Einstellung für den Sitzbenutzer dann starr vorgegeben, so daß dieser in jedem Fall eine Zwangshaltung für eine längere Zeit einnehmen muß.

Durch die DE-A-4016687 ist eine gattungsgemäße Sitzanordnung in Fahrzeugen, insbesondere Personenkraftfahrzeugen, bekannt, bestehend aus einem im Fahrzeug bewegbar befestigten Sitz und einer gegenüber diesem Sitzteil schwenkbaren Rückenlehne. Der bekannte Sitz ist zwischen einer Liegesitzstellung und einer halb knienden Sitzstellung sowie die Rückenlehne zwischen einer senkrechten Stellung und einer Liegesitzstellung auf einer gemeinsamen Sitzachse verstellbar, die im Fahrzeug quer zu der Längsachse drehfest und im wesentlichen in Längsrichtung des Fahrzeuges einstellbar befestigt ist. Auf dem Fahrzeugboden vor dem Sitz ist eine Beinstütze befestigt, die zur Verwendung als Fußstütze, Schienbein- oder Unterschenkelstütze in unterschiedliche Schwenkstellungen bringbar ist. Das dahingehende Abstützteil ist über einen längeneinstellbaren Tragarm in der Höhe einstellbar und die obere vom Fahrzeugboden abgewandte Auflagefläche nimmt ausschließlich für alle genannten Beinbereiche die Abstützfunktion wahr. Über einen Kraftspeicher in Form eines federelastischen Bauteils wird das Abstützteil in einer Grundstellung gehalten mit einer Art an möglichen Schwenkstellungen als Wadenauflage. Aus dieser Grundstellung heraus läßt sich das bekannte Abstützteil entgegen der Wirkung des Kraftspeichers in eine andere Art an mögliche Schwenkstellungen herausbewegen, so daß der Sitzbenutzer kniend mit der Vorderseite seines Beines unterhalb des Kniegelenkes auf dem Abstützteil ruhen kann. Mithin erlaubt die bekannte Anordnung eine halb kniende Sitzstellung für den Sitzbenutzer in einem Fahrzeug, was ansonsten nur aus dem Büromöbelbereich her bekannt ist. Da der Tragarm im Bereich seines einen freien Endes mit dem Fahrzeugboden zu verbinden ist, baut gleichfalls diese bekannte Lösung groß auf und kann teuer in der Herstellung sein.

Durch die JP-A-08 080 230 ist ein Fluggastsitz bekannt mit einem Sitzteil und einer gegenüber dem Sitzteil schwenkbar einstellbaren Rückenlehne. Das Sitzteil ist über ein Sitzrahmengestell gegenüber einem Kabinenboden aufgeständert und begrenzt nach außen hin einen Hohlraum zur Aufnahme einer gepolsterten Beinauflage, an deren unterem freien Ende eine Fußstütze klappbar angelenkt ist, die im aufgeklappten Zustand in einer fest vorgegebenen Abstützlage die Füße eines Sitzbenutzers abstützt und die im hochgeklappten Zustand mit ihrer Fußstützenauflage in Anlage kommt mit der Oberseite der Beinauflage und dergestalt eine Wadenauflage bildet. Die Beinauflage ist an ihrem oberen Ende im Bereich des Überganges zum Sitzteil in einer Kulisse des Sitzrahmengestells geführt und zur weiteren Abstützung weist die genannte Führung noch zwei gegenüberliegende Anlenkstangen auf, die jeweils mit ihrem einen freien Ende am unteren Drittel der Beinauflage angreifen und die es dergestalt in der Art einer Zwangsführung zusammen mit der sonstigen Kulissenführung ermöglichen, bei nicht benötigter Bein- und Fußstützenauflage die dahingehenden Komponenten im aufeinandergeklappten Zustand in das Sitzrahmengestell vollständig einzufahren und bei Bedarf wieder hervorzuholen, wobei für die dahingehenden Ein- und Ausfahrvorgänge ein Elektromotor eingesetzt werden kann, der im Sitzrahmengestell angeordnet über eine zweiteilige Betätigungsstange an einem Rahmengestell der Beinauflage angreifend die Betätigung vornimmt. Das mit der Bein- und Fußauflage ausfüllbare Sitzrahmengestell der dahingehend bekannten Lösung steht für andere Zwecke, beispielsweise für das Unterbringen von Handgepäck, Schwimmwesten od. dgl., nicht mehr zur Verfügung. Bereits aus Kosten-, Platz- und Gewichtsgründen wäre die dahingehende Lösung für die Economy-Klasse in Flugzeugen nicht einsetzbar.

Der Erfindung liegt daher die Aufgabe zugrunde, die bekannten Fahrzeugsitze für Flug- und Kraftfahrzeuge derart weiter zu verbessern, daß deren Sitzkomfort auch im Fuß- und/oder Beinbereich erhöht ist, ohne daß damit ein erheblicher Platz-Mehrbedarf oder Kosten-Mehraufwand verbunden ist. Eine dahingehende Aufgabe löst ein Fahrzeugsitz mit den Merkmalen des Anspruches 1.

Dadurch, daß gemäß dem kennzeichnenden Teil des Patentanspruches 1 der Tragarm mit seinem anderen freien Ende am Sitzrahmengestell schwenkbar und in vorgebbaren Stellungen verrastbar angelenkt ist, daß die Fuß- und die Beinstütze auf jeweils gegenüberliegenden Flächen des Abstützteils angeordnet sind und daß der Tragarm mittig an der Fuß- und/oder Beinstütze angelenkt ist, läßt sich in den Bereichen der Beine eines Sitzbenutzers, die einer besonders wirksamen Unterstützung bedürfen, eine kombinierte Fuß- und Beinauflage erreichen, die den Sitzkomfort erhöht und den Sitzbenutzer bei der "Sitzarbeit" entlastet. Da mit nur einem Stützteil auf seinen jeweils gegenüberliegenden Flächen einmal eine Fußstütze und einmal eine Beinstütze verwirklicht ist, ist die dahingehende Lösung auch kostengünstig und platzsparend realisierbar, wozu auch mit beiträgt, daß der jeweilige mit dem Sitzrahmengestell verbundene Tragarm mit integrierter Fuß- und/oder Beinstütze es vermeidet, wie im Stand der Technik aufgezeigt, in der Art einer Liege das jeweilige gesamte Bein unter Bildung einer Gesamtauflagefläche zu unterstützen.

Über den schwenk- und verrastbaren Tragarm mit Abstützteil, dessen eine Fläche die Fußstütze und dessen andere gegenüberliegende Fläche die Beinstütze realisiert, ist darüber hinaus immer eine ergonomisch sinnfällige Anpassung des Stützteils an das menschliche Bein erreichbar, da die jeweilige Stütze in einem Bereich an möglichen Schwenkstellungen ohne weiteres einstellbar ist, so daß auch Sitzbenutzer, die von ihren Körperabmessungen her, insbesondere im Hinblick auf die Körperlänge, stark voneinander abweichen sollten, immer eine gut anpaßbare Sitzkonstruktion vorfinden. In einer Art der möglichen Schwenkstellungen ist also ausschließlich die Fußstütze gebildet und in der anderen Art an möglichen Schwenkstellungen ausschließlich die Beinstütze, vorzugsweise in Form einer Wadenauflage. Damit läßt sich die angesprochene Stütze mit ihrem Abstützteil multifunktional einsetzen.

Bei einer bevorzugten Ausführungsform des erfindungsgemäßen Fahrzeugsitzes ist der Tragarm mit der Fuß- und/oder Beinstütze rückwärtig unterhalb der Rückenlehne am Sitzrahmengestell angeordnet, vorzugsweise jedoch vorderseitig im Beinbereich des Sitzbenutzers. Bei der letztgenannten Ausführungsform ist es auch möglich, die Beinstütze in der Art einer Wadenstütze auszubilden und diese in ihrer Funktionalität mit einer separaten Fußstütze zu kombinieren, die dann an der hinteren Sitzrahmengestellstruktur des davor befindlichen Fahrzeugsitzes anzuordnen ist.

Vorzugsweise sind auf der Seite der Fußstütze zwei einander gegenüberliegende Haltestege vorhanden, die von einer Achse des Tragarmes durchgriffen das freie Ende des Tragarmes zwischen sich aufnehmen. Die Unterseite des Tragarmes kann dabei vorzugsweise eine Anschlagfläche für die Fußstütze ausbilden, so daß über die Anschlagfläche ein definitiver Halt für die auf der Stütze aufgesetzten Füße gewährleistet ist.

Bei einer weiteren bevorzugten Ausführungsform des erfindungsgemäßen Fahrzeugsitzes ist die Fußstütze dabei derart mit Erhebungen versehen, daß eine Art Massagefunktion bei dem jeweiligen Sitzbenutzer realisiert ist. Insbesondere bei einer längeren Benutzung des Sitzes auf einer Flug- oder Omnibusreise läßt sich derart der Komfort für den Sitzbenutzer deutlich erhöhen.

Bei einer weiteren bevorzugten Ausführungsform des erfindungsgemäßen Fahrzeugsitzes weist der Tragarm zwei in einem vorgebbaren Winkel zueinander angeordnete Schenkelteile auf, wobei das dem Sitzrahmengestell zugewandte Schenkelteil an diesem über ein Drehteil mit Rasterung angelenkt ist. Neben einem platzsparenden Aufbau ist hierbei auch gewährleistet, den Tragarm mit der Fuß- und/oder Beinstütze vollständig nach unten wegzuschwenken, um die dahingehende Stütze außer Betrieb zu nehmen. Des weiteren kann es vorzugsweise vorgesehen sein, zusätzlich eine Abstützhilfe des Sitzrahmengestells für das Drehteil mit der Rasterung vorzusehen.

Des weiteren kann vorgesehen sein, an der Anlenkstelle von Tragarm zu der Stütze eine Rückstellfeder vorzusehen, die bei einer Schwenkbewegung in Richtung der aufgerichteten Fußstütze vorgespannt bei Rückstellung eine kraftunterstützte Anlage für das jeweilige Bein des Sitzbenutzers gewährleistet, so daß insbesondere eine aktive Wadenunterstützung erreicht ist.

Im folgenden wird der erfindungsgemäße Fahrzeugsitz anhand einer Ausführungsform näher erläutert.
Es zeigen in prinzipieller und nicht maßstäblicher Darstellung die
- Fig. 1 und 2: in Seitendarstellung einen Fahrzeugsitz, insbesondere in Form eines Fluggastsitzes, mit aktivierter Beinstütze bzw. mit aktivierter Fußstütze;
- Fig.3 und 4: in perspektivischer Ansicht einen Teil des Fahrzeugsitzes mit benutzbarer Beinauflage bzw. Fußstütze.

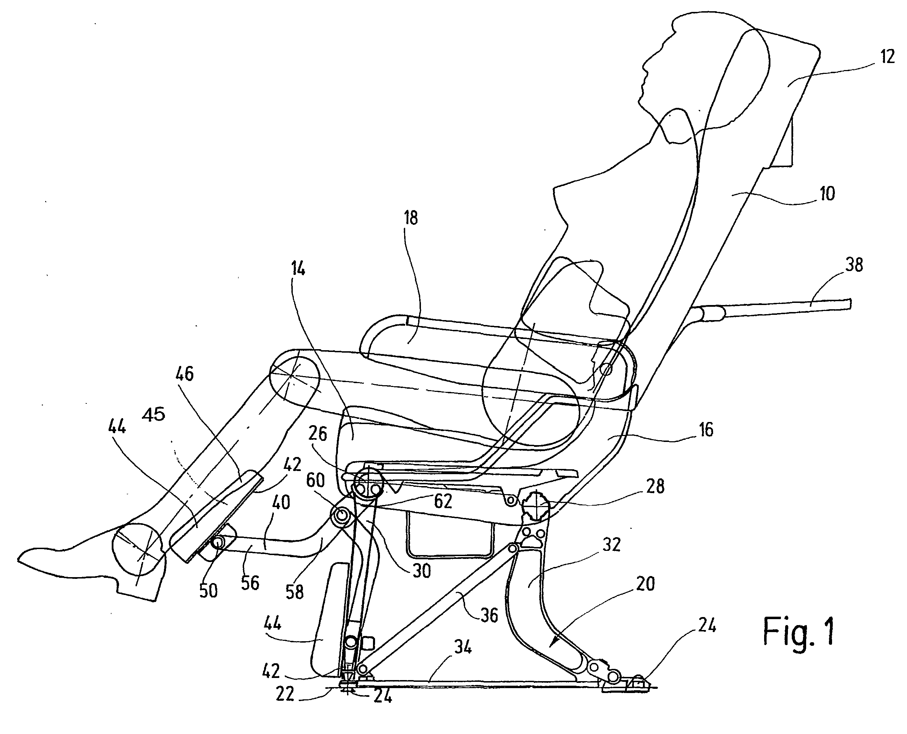

Der in der Fig.1 gezeigte Fahrzeugsitz, insbesondere Fluggastsitz, weist eine in der Neigung einstellbare Rückenlehne 10 auf mit integrierter Kopfstütze 12. Im unteren Teil geht die Lehne 10 über in den eigentlichen Sitzteil 14, wobei ein weiblicher Sitzbenutzer in prinzipieller Darstellung auf dem gezeigten Sitz Platz genommen hat. Das Sitzteil 14 ist von einer Sitzschale 16 vorzugsweise aus Kunststoffmaterial aufgenommen und weist mindestens eine schwenkbare Armlehne 18 auf, die zur Erhöhung des Sitzkomforts in der Darstellung nach der Fig.1 sich in der heruntergeschwenkten Benutzerposition befindet. Die Sitzschale 16 und mithin das Sitzteil 14 stützen sich an einem als Ganzes mit 20 bezeichneten Sitzrahmengestell ab, das eine Befestigung des Fahrzeugsitzes an einem Fahrzeugboden 22 über geeignete Befestigungsmittel 24 erlaubt. Die dahingehende Befestigung ist ebenso wie der Aufbau des Sitzrahmengestells 20 Stand der Technik und wird daher nicht mehr im einzelnen beschrieben.

Das Sitzrahmengestell 20 besteht jedenfalls aus einer vorderen Quertraverse 26 sowie einer hinteren Quertraverse 28 im Bereich der Rückenlehne 10. Die beiden Quertraversen 26,28 unterfassen die Sitzschale 16 und mithin das Sitzteil 14 über ihre gesamte Breite. Zum Fahrzeugboden 22 hin sind die beiden Quertraversen 26,28 über endseitig angeordnete Stützen 30 bzw. 32 abgeständert und über eine Bodentraverse 34 jeweils endseitig miteinander verbunden. Eine Schrägtraverse 36 kann der weiteren Aussteifung dienen, die insbesondere in Blickrichtung auf die Fig.1 gesehen jeweils zwischen dem unteren Ende einer jeden Stütze 30 und dem oberen Ende einer jeden Stütze 32 verläuft. Die dahingehende Konstruktion des Sitzrahmengestells 20 ist vorzugsweise in Leichtbau, insbesondere unter Verwendung von Aluminiummaterialien, hergestellt.

Im hinteren Bereich der Rückenlehne 10 kann ein Klapptisch 38 angeordnet sein, der bei einer Reihenanordnung der Fahrzeugsitze dem nachfolgenden Sitzbenutzer als Tischfläche dient. Der dahingehend beschriebene Aufbau bei Fahrzeugsitzen, wie Fluggastsitzen oder Kraftfahrzeugsitzen in Nutzfahrzeugen, wie Omnibusse, ist allgemein bekannt, so daß hierauf an dieser Stelle nicht mehr näher eingegangen wird. Neben der angesprochenen Einstellmöglichkeit für die Rückenlehne 10 können weitere Einstellmöglichkeiten, insbesondere im Hinblick auf das Sitzteil 14, des Sitzes gegeben sein.

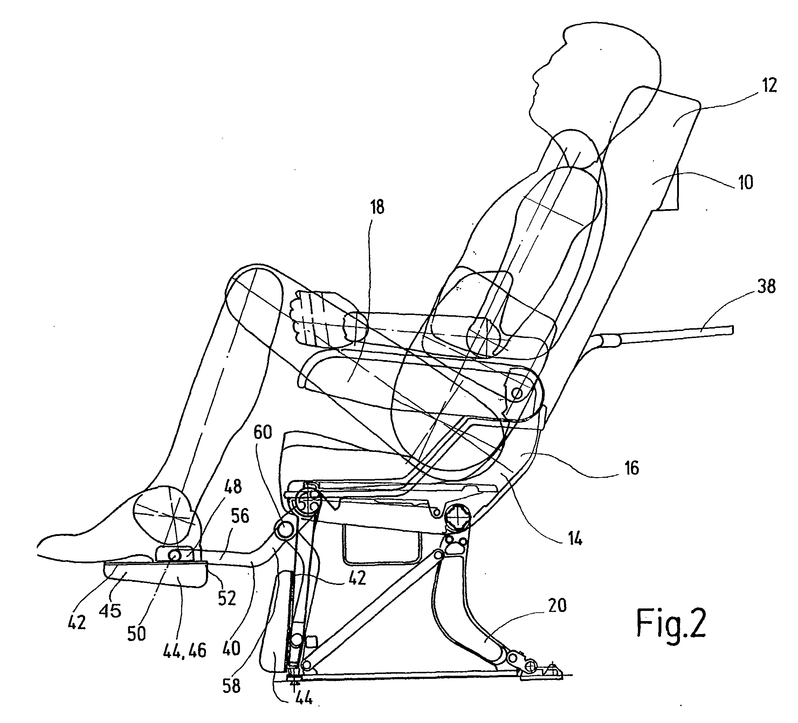

Bei der Ausführungsform nach den Figuren ist im Bereich der vorderen Quertraverse 26 am Sitzrahmengestell 20 ein Tragarm 40 schwenkbar und in vorgebbaren Stellungen verrastbar angelenkt, der sowohl eine Fußstütze 42 als auch eine Beinstütze 44 in Form einer Wadenauflage aufweist. Die angesprochene Stütze ist also multifunktional, d.h. sie kann in Abhängigkeit von dem Willen des jeweiligen Sitzbenutzers einmal der Fußunterstützung und einmal der Beinunterstützung dienen. Die Breite der angesprochenen Stütze ist derart ausgebildet, daß der Sitzbenutzer wahlweise ein vorzugsweise, aber jedoch beide Beine oder Füße zur Abstützung bringen kann. Im Sinne der Ergonomie ist damit ein dynamisches Sitzen mit der Stütze erreichbar, so daß auch auf langen Flug- oder Reisestrecken ein erhöhter Sitzkomfort in platzsparender Weise mit geringem Kostenaufwand erreicht ist. Bei einer nicht näher dargestellten Ausführungsform könnte in entsprechender Abänderung im Tragarm mit der Stütze 42,44 auch an der hinteren Quertraverse 28 angelenkt sein, so daß ein in der Sitzreihe nachfolgender Sitzbenutzer die Stütze für seine Beine nutzen könnte. Bevorzugt ist jedoch die Ausführungsform gemäß der Darstellung nach den Fig.1 und 2. Sowohl die Fußstütze 42 als auch die Beinstütze 44 ist somit Bestandteil eines gemeinsamen Abstützteils 45, wobei die Fußstütze 42 auf der einen Fläche des Abstützteils 45 angeordnet ist und die Beinstütze 44 auf der gegenüberliegenden anderen Fläche des genannten Abstützteils 45. Sofern die Beinstütze 44 als Wadenstütze ausgebildet ist, kann darüber hinaus die zugeordnete Fläche des Abstützteils 45 derart mit einer Formgebung versehen sein, daß sie den Belangen der Körperkontur des jeweiligen Sitzbenutzers nachkommt.

Bei der Darstellung nach der Fig.1 ist die Stütze in eine Stellung verschwenkt, in der sie als Beinstütze 44, insbesondere als Wadenauflage, dient. Demgemäß ist die Beinstütze 44 mit einer nachgiebigen Polsterung 46 versehen, die zum einen den Auflagekomfort erhöht, dennoch aber eine sichere Abstützung im Wadenbereich ermöglicht. Bei der Darstellung nach der Fig.2, die einen Fahrzeugsitz gemäß der Fig.1 zeigt, der jedoch diesmal von einem männlichen Sitzbenutzer in Benutzung genommen ist, ist die Beinstütze 44 abgeklappt und die Fußstütze 42 weist nach oben sowie die Beinstütze 44 mit Polsterung 46 nach unten. Um eine sichere Auflage des Fußes des Sitzbenutzers zu erreichen, ist die Fußstütze 42 als massive Platte ausgebildet und Beschädigungen der darunterliegenden weichen Polsterung 46 der Beinstütze 44 sind vermieden. Für die bereits angesprochene Schwenkbewegung der Stütze ist diese am vorderen Ende des Tragarmes 40 angelenkt.

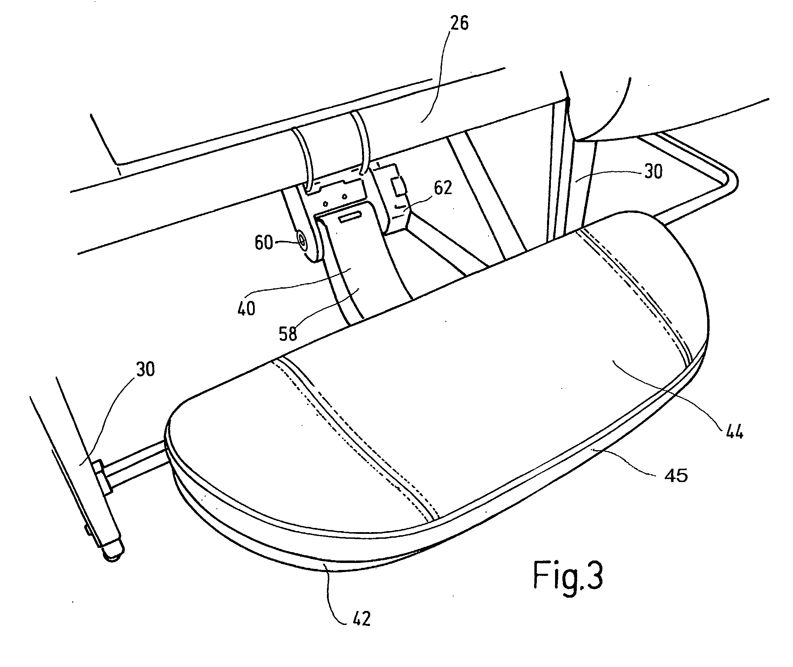

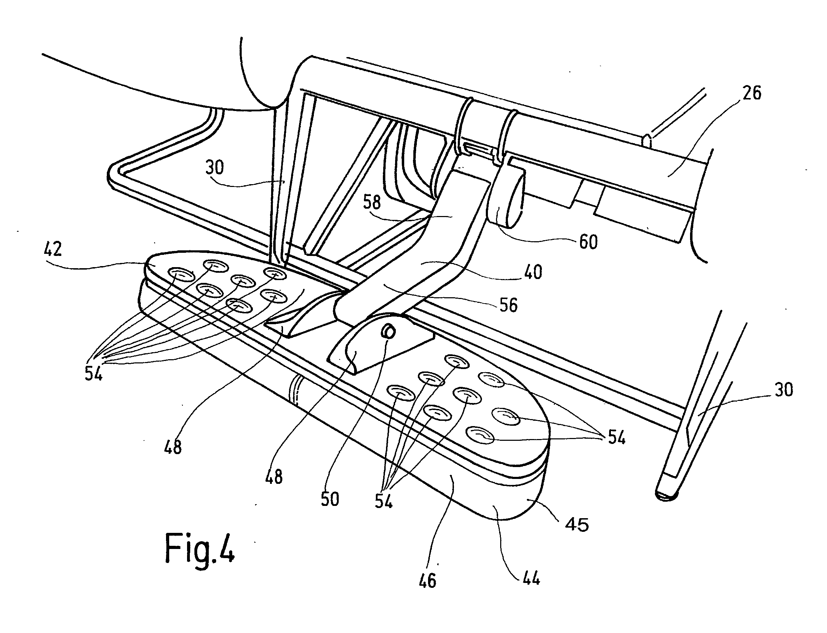

Der angesprochene Tragarm 40 ist, wie dies insbesondere die Fig.3 und 4 zeigen, mittig an der Fuß- oder Beinstütze 42,44 schwenkbar angelenkt. Für die dahingehende schwenkbare Anlenkung sind auf der Seite der Fußstütze 42 zwei einander gegenüberliegende Haltestege 48 angeordnet, die von einer Achse 50 des Tragarmes 40 durchgriffen das freie Ende des Tragarmes 40 zwischen sich aufnehmen. Die dahingehenden Haltestege 48 unterteilen die Fußstütze 42 in einen rechten und einen linken Auflagebereich für die Füße des Sitzbenutzers (vgl. Fig.2). Im Bereich der Achse 50 können zwischen der Stütze 42,44 und dem Tragarm 40 Federelemente (nicht dargestellt) angeordnet sein, so daß in beiden Fällen die jeweilige Auflage für das Bein oder den Fuß federbelastet zustande kommt und die Neigung der Stütze sich jeweils an die Ergonomie des Sitzbenutzers automatisch anpaßt. Der dahingehende Auflagevorgang erfolgt mithin jeweils federunterstützt, wobei die Federunterstützung auch nur zur Unterstützung der Beinauflage oder der Fußauflage vorhanden sein kann.

Wie insbesondere die Fig.2 zeigt, bildet dabei die Unterseite des Tragarmes 40 eine Anschlagfläche 52 für die Fußstütze 42 aus. Wie des weiteren die Fig.4 zeigt, ist die plattenartige Fußstütze 42 mit noppenartigen Erhebungen 54 versehen, die eine Art Massagefunktion erlauben für den Fall, daß der Sitzbenutzer die Schuhe ablegt und derart die Fußstütze 42 nutzt. Wie die Fig.2 des weiteren zeigt, ist die Achse 50 als Schwenkachse zwischen Tragarm 40 und Stütze 42,44 an den Haltestegen 48 derart angelenkt, daß diese gegenüber dem Sprunggelenk des jeweiligen Sitzbenutzers geringfügig in Richtung des Sitzes zurückversetzt ist. Dies hat sich als besonders benutzerfreundlich erwiesen.

Der Tragarm 40 weist zwei in einem vorgebbaren Winkel zueinander angeordnete Schenkelteile 56,58 auf, die miteinander einen stumpfen Winkel begrenzen, vorzugsweise in der Größe von 135°. Das dem Sitzrahmengestell 20 zugewandte Schenkelteil 58 ist an diesem über ein Drehteil 60 mit integrierter Rasterung angelenkt. Bei der Ausführungsform gemäß den Fig. 3 und 4 ist das dahingehende Drehteil 60 mit integrierter Rasterung unmittelbar an der oberen vorderen Quertraverse 26 des Fahrzeugsitzes angelenkt. Vorzugsweise ist jedoch gemäß der Ausführungsform nach den Fig. 1 und 2 das Drehteil 60 integraler Bestandteil eines stegartigen Kopplungsstückes 62, das wiederum an seinem dem Drehteil 60 gegenüberliegenden Ende fest an der Quertraverse 26 angelenkt ist. Durch den damit einhergehenden Überstand bedingt durch den Kopplungssteg 62 läßt sich, wie dies insbesondere die Fig.1 und 2 zeigen, der Tragarm 40 mit Stütze 42,44 in Richtung des vorderen Stützenpaares 30 nach unten zurückschwenken, so daß die Stütze hinter der vorderen Sitzkante des Sitzteiles 40 zu liegen kommt. Wird die Stütze wieder benötigt, kann sie aus der in den Fig.1 und 2 gezeigten entgegen dem Uhrzeigersinn weggeschwenkten Aufbewahrungsposition wieder im Uhrzeigersinn in eine Benutzungsposition zurückgebracht werden. Dabei ist über das Drehteil 60 mit integrierter Rasterung in definierten Rasterungsschritten eine Positionierung des Tragarmes 40 mit Stütze 42,44 möglich.

Die Rasterung in den angesprochenen Stufenschritten kann derart fein erfolgen, daß eine nahezu stufenlose Einstellmöglichkeit für die Stütze 42,44 gewährleistet ist. Der Tragarm 40 mit der zugeordneten Stütze 42,44 kann wiederum in Leichtbauweise, vorzugsweise aus einem Aluminiumwerkstoff, gebildet sein, was insbesondere im Flugzeugbau eine Rolle spielt. Aufgrund der schwenkbaren Anordnung der Stütze 42,44 um die Achse 50 und im Hinblick auf die Vielzahl der Schwenkstellungen bezogen auf das Drehteil 60 mit integrierter Rasterung sind eine Vielzahl von Anpassungsmöglichkeiten an den jeweiligen Sitzbenutzer gegeben, die auch während des Betriebes veränderbar sind, so daß eine deutliche Erhöhung des Sitzkomforts im Sinne eines dynamischen Sitzens erreicht ist. Ferner eignet sich die erfindungsgemäße Anordnung gut für eine Ruhestellung des Sitzbenutzers, beispielsweise wenn dieser schläft. Durch das vollständige Wegschwenken der Stütze über den Tragarm 40 ist diese dem Sitzbenutzer, sofern er die Stütze nicht benötigen sollte, nicht im Wege und im Falle eines anstehenden Unfalls ist die Stütze sicher verstaut und beinhaltet mithin kein Unfallrisiko. Die gezeigte Anordnung eignet sich besonders gut im Hinblick auf ihren platzsparenden Aufbau für Fluggastsitze und für Sitze in Nutzfahrzeugen, wie Omnibusse.

## Patentansprüche

1. Fahrzeugsitz für Flug- und Kraftfahrzeuge mit einer Rückenlehne (10) und einem Sitzteil (14), das von einem mit einem Fahrzeugboden (22) verbindbaren Sitzrahmengestell (20) gehalten ist, mit nur einem Tragarm (40), der an seinem einen freien Ende schwenkbar eine kombinierte Fuß(42)- und Beinstütze (44) als jeweilige Flächen eines Abstützteils (45) aufweist, wobei bei einer Art an möglichen Schwenkstellungen die Fußstütze (42) und bei einer anderen Art an möglichen Schwenkstellungen die Beinstütze (44) ausschließlich realisiert ist, **dadurch gekennzeichnet, daß** der Tragarm (40) mit seinem anderen freien Ende am Sitzrahmengestell schwenkbar und in vorgebbaren Stellungen verrastbar angelenkt ist, daß die Fuß(42)- und die Beinstütze (44) auf jeweils gegenüberliegenden Flächen des Abstützteils (45) angeordnet sind und daß der Tragarm (40) mittig an der Fuß(42)- und/oder Beinstütze (44) angelenkt ist.

2. Fahrzeugsitz nach Anspruch 1, **dadurch gekennzeichnet, daß** der Tragarm (40) mit der Fuß- und/oder Beinstütze (44) rückwärtig unterhalb der Rückenlehne (10) am Sitzrahmengestell (20) angeordnet ist oder vorderseitig im Beinbereich des Sitzbenutzers.

3. Fahrzeugsitz nach Anspruch 1 oder 2, **dadurch gekennzeichnet, daß** die Beinstütze (44) als Wadenauflage ausgebildet ist.

4. Fahrzeugsitz nach einem der Ansprüche 1 bis 3, **dadurch gekennzeichnet, daß** auf der Fußstütze (42) zwei einander gegenüberliegende Haltestege (48) vorhanden sind, die von einer Achse (50) des Tragarmes (40) durchgriffen das freie Ende des Tragarmes (40) zwischen sich aufnehmen.

5. Fahrzeugsitz nach Anspruch 4, **dadurch gekennzeichnet, daß** die Unterseite des Tragarmes (40) eine Anschlagfläche (52) für die Fußstütze (42) ausbildet.

6. Fahrzeugsitz nach einem der Ansprüche 1 bis 5, **dadurch gekennzeichnet, daß** zumindest die Fußstütze (42) derart mit Erhebungen (54) versehen ist, daß eine Art Massagefunktion bei dem jeweiligen Sitzbenutzer realisiert ist.

7. Fahrzeugsitz nach einem der Ansprüche 1 bis 6, **dadurch gekennzeichnet, daß** der Tragarm (40) zwei in einem vorgebbaren Winkel zueinander angeordnete Schenkelteile (56,58) aufweist und daß das dem Sitzrahmengestell (20) zugewandte Schenkelteil (58) an diesem über ein Drehteil (60) mit Rasterung angelenkt ist.

8. Fahrzeugsitz nach Anspruch 7, **dadurch gekennzeichnet, daß** zusätzlich ein Koppelteil (62) des Sitzrahmengestells (20) für das Drehteil (60) mit Rasterung vorgesehen ist.

9. Fahrzeugsitz nach einem der Ansprüche 1 bis 8, **dadurch gekennzeichnet, daß** der Schwenkbereich zwischen den beiden Arten an Schwenkstellungen mindestens 135° beträgt.

## Claims

1. Vehicle seat for aircraft and motor vehicles, with a backrest (10) and a seat part (14), which is supported by a seat frame support (20), which may be connected with a vehicle floor (22), with only one support arm (40), and which incorporates a combined and pivoting foot (42) and leg support (44) at its free end at the relevant surfaces of the support piece (45), whereby possible pivot positions of the foot support (42) can be realised on the one hand, whilst possible pivot positions of the leg support (44) can be realised independently on the other hand, **characterised in that** the support arm (40) is affixed to the seat frame support in a pivotable manner with its other free end and may be adjusted detent-wise through preset positions, so that the foot (42) and the leg support (44) are located upon the relevant opposite surfaces of the support piece (45), and **in that** the support arm (40) can be centrally positioned in relation to the foot (42) and the leg support (44).

2. Vehicle seat according to Claim 1, **characterised in that** the support arm (40) is affixed to the seat frame support (20) in a reverse orientation in relation to the foot and/or leg support (44) below the backrest (10) or in front of the leg space of the seat user.

3. Vehicle seat according to Claim 1 or 2, **characterised in that** the leg support (44) takes the form of a calf support.

4. Vehicle seat according to one of the preceding Claims 1 to 3, **characterised in that** two opposing support bridges (48) are located upon the foot support (42), which extend through an axle (50) of the support arm (40) and receive the free end of the said support arm (40) between the same.

5. Vehicle seat according to Claim 4, **characterised in that** the underside of the support arm (40) forms an abutment surface for the foot support (42).

6. Vehicle seat according to one of the preceding Claims 1 to 5, **characterised in that** at least the foot support (42) is equipped with projections (54) in such a way that a kind of massage function is realised for the benefit of the relevant seat user.

7. Vehicle seat according to one of the preceding Claims 1 to 6, **characterised in that** the support arm (40) incorporates two flank sections (56, 58) which are arranged at an predetermined angle towards one another, and **in that** the flank section (58) that is directed towards the seat frame support (20) is positioned in relation to the same with the aid of a rotating part (60), which is equipped with an engagement mechanism.

8. Vehicle seat according to Claim 7, **characterised in that** the seat frame support (20) is further equipped with a coupling part (62) for the rotating part (60) with the engagement mechanism.

9. Vehicle seat according to one of the preceding Claims 1 to 8, **characterised in that** the pivoting area between the two types of pivot position consists of at least 135°.

## Revendications

1. Siège de véhicule pour avion et voiture doté d'un dossier (10), et d'une partie de siège (14) maintenue par un châssis de siège (20) associé à un plancher de véhicule (22), avec seulement un bras porteur (40) présentant, de façon pivotante, à l'une de ses extrémités libres une combinaison de repose-pied (42) et repose-jambe (44) constituant la surface respective d'une partie de soutien (45), moyennant quoi pour un mode de réalisation le repose-pied (42) est exclusivement réalisé pour des positions pivotantes possibles et pour un autre mode de réalisation le repose-jambe (44) est exclusivement réalisé pour des positions pivotantes possibles, **caractérisé en ce que** le bras porteur (40) avec son autre extrémité libre est articulé de façon verrouillable au châssis du siège de façon pivotante et dans des positions prédéfinissables, et que le repose-pied (42) et le repose-jambe (44) sont affectés aux surfaces de la partie de soutien (45) y faisant respectivement face, et que le bras porteur (40) est articulé au milieu contre le repose-pied (42) et/ou repose-jambe (44).

2. Siège de véhicule selon la revendication 1, **caractérisé en ce que** le bras porteur (40) est fixé aux repose-pied et/ou repose-jambe (44) en arrière sous le dossier (10) sur le châssis du siège (20) ou à l'avant dans la zone des jambes de l'utilisateur du siège.

3. Siège de véhicule selon la revendication 1 ou 2, **caractérisé en ce que** le repose-jambe (44) est conçu comme un repose-mollet.

4. Siège de véhicule selon la revendication 1 ou 3 **caractérisé en ce que** l'on trouve sur le repose-pied (42) deux croisillons de support se faisant face, et s'enclenchant autour d'un axe (50) du bras porteur (40) et traversant l'extrémité libre du bras porteur (40).

5. Siège de véhicule selon la revendication 4, **caractérisé en ce que** le dessous du bras porteur (40) crée une surface de butée (52) pour le repose-pied (40).

6. Siège de véhicule selon l'une quelconque des revendications de 1 à 5, **caractérisé en ce qu'**au moins le repose-pied (42) de ce type est doté de proéminences (54), afin qu'une sorte de fonction de massage soit réalisée pour chaque utilisateur du siège.

7. Siège de véhicule selon l'une quelconque des revendications de 1 à 6, **caractérisé en ce que** le bras porteur (40) présente deux parties de branche (56, 58) disposées l'une vis-à-vis de l'autre à un angle prédéfinissable, et **en ce que** la partie de branche tournée vers le châssis du siège (20) est articulée à celui-ci à l'aide d'une partie pivotante (60) dotée d'un verrouillage.

8. Siège de véhicule selon la revendication 7, **caractérisé en ce qu'**en plus, une partie d'assemblage (62) du châssis du siège (20) est prévue pour la partie pivotante (60) dotée d'un verrouillage.

9. Siège de véhicule selon l'une quelconque des revendications 1 à 8, **caractérisée en ce que** la zone pivotante entre les deux modes de réalisation sur les positions pivotantes est à au moins 135°.
